# EUROPEAN PATENT APPLICATION

(11) **EP 2 601 845 A1**
(43) Date of publication of application: **12.06.2013**
(21) Application number: 11191972.6
(22) Date of filing: 05.12.2011
(51) Int. Cl.: A23G 1/00, A23G 1/54, A23G 1/32, A23G 1/40, A23G 1/30

(54) **Chocolate product with tropicalised shell**

(71) Applicant: Nestec S.A., 1800 Vevey (CH)
(72) Inventor: Althaus, Tim Oliver, 1005 Lausanne (CH); Palzer, Stefan, York YO32 9FX (GB); Niederreiter, Gerhard, 1073 Savigny (CH); Chisholm, Helen, 1033 Cheseaux (CH); Bovet, Nicolas, 1665 Estavannens (CH)
(74) Representative: Stephen, Paula-Marie

(57) **Abstract**

The present invention is directed to a chocolate product with a tropicalized shell comprising chocolate and a humectant liquid and a non-tropicalised chocolate core.

## Description

### Field of the invention

The present invention relates to a chocolate product with improved heat-stability and to a method for making such a product. Within the context of the present invention, the term chocolate product is to be understood as covering products containing only fats originating from cocoa butter, as well as products containing other vegetable fats, i.e. so-called chocolate analogues.

### Background of the invention

Conventionally manufactured chocolate consists of sugars, cocoa solids and proteins (usually from milk) homogeneously dispersed in fats and fatty substances originating from cocoa butter. Chocolate analogues contain other vegetable fats in partial/total replacement of the cocoa butter fat. Often the continuous fat phase also contains dairy fat.

Cocoa butter typically starts to soften at about 28°C, with consequent loss of the mechanical strength of the chocolate. This means that at the high ambient temperatures frequently encountered in tropical countries, chocolate becomes sticky or even runny. It tends to stick to the wrapper and fall apart when the wrapper is removed, leaving a semi-liquid mass that can often only be eaten with a spoon if cleanliness is desired. Enrobed chocolate products typically lose integrity under these conditions, with their contents often leaking and individual units tending to stick together in the packaging. Chocolate also loses the 'snap' that is an important (and pleasurable) textural characteristic of chocolate stored and eaten under cooler conditions.

Attempts to produce a chocolate that is resistant to heat are numerous. The approaches most widely used can be divided two main groups: 1) incorporation of high-melting point fats; and 2) creation of a three-dimensional matrix or network of sugar crystals or protein particles that will act as a sponge and hold the fat - thus maintaining the structure of the product even on melting of the fat. Over the last century many different methods have been reported.

There are two major drawbacks to the use of high-melting fats in chocolate. Namely that food regulations in many countries restrict the use of substitutes for cocoa butter in chocolate. Secondly, the high-melting point fats in chocolate-like products give an unpleasant waxy mouthfeel.

Many methods have been described for causing accretion of sugar crystals by adding water or a polyol to chocolate, as originally disclosed in DE 389 127 (1919). CH 409,603 (1962) describes the direct incorporation of water into liquid chocolate mass during production causing a rapid increase in viscosity. As a result, it is impossible to pour the material into molds or use for enrobing.

EP0189469 (1985) describes the mixing of a liquid polyol with tempered conventional chocolate mass before depositing it into molds. Polyols that are liquid at ambient temperatures (such as glycerol) are preferred, though the patent teaches that higher melting polyols (such as sorbitol) can also be used. The mixture is held at slightly elevated temperatures (24°C to 35°C) for a short period of time during which the viscosity rises. This is stated to be the result of a chemical reaction between the fat and the polyol. The time and temperature of the holding period are critical parameters that control the viscosity increase - the viscosity must remain low enough for the subsequent molding or enrobing operations.

In the method described by US5,445,843 a polyol (such as glycerol) is encapsulated by emulsifying it with a liquid fat (such as molten cocoa butter) and lecithin as an emulsifier, then spray-chilling the emulsion. The "capsules" (which have an average diameter 100 microns) are added to liquid chocolate mass to achieve a polyol content of from 0.2 to 5% by weight. The product was reported to have remained liquid for several minutes.

The use of emulsification to avoid a too rapid incorporation of water into the chocolate mass is described in US 4,446,166. An oil-in-water emulsion (typically 50% water, 50% fat) is prepared with cocoa butter using lecithin as the emulsifier. The emulsion is cooled and milled to give partially or entirely solid particles that are then added to the chocolate mass at levels of between 2 and 10%. Once incorporated in the warmer liquid chocolate mass, the emulsion particles will melt, releasing the water droplets. A disadvantage of this method is the need to guarantee a homogeneous distribution of the emulsion particles before they melt. Premature release of water causes a sudden increase in viscosity that renders the chocolate unsuitable for molding or enrobing.

EP 0297054 describes a method for homogeneously dispersing water by using an aqueous foam. The foam is stabilized with an edible foaming agent (such as egg albumin) and added to conventionally prepared chocolate mass after tempering. The foam is added at levels that deliver from 0.5 to 2% of water, reportedly with no noticeable increase in viscosity to provide a treated chocolate usable for molding or enrobing. The trapped gases can be removed from the still liquid product by exposing it to reduced pressure. EP0407347 describes a similar method.

EP0393327 discloses another variation in which the aqueous phase of the water-in-oil emulsion contains sugars (such as sucrose or glucose) or polyols (such as sorbitol). The emulsion is prepared with 30 to 60% fat using emulsifying agent at a level of 0.1 to 3%. Described suitable emulsifying agents are lecithin, glycerol fatty acid ester, polyglycerol fatty acid ester, polyglycerol condensed ricinoleic acid ester and sucrose fatty acid ester that has an HLB not more than 7. The level of sugar or polyol in the aqueous phase of the emulsion can be between 20 and 60% and the level of water between 15 and 25%. The sugar or polyol in the aqueous phase is reported to provide smoother texture to the heat-stable chocolate mass. A storage period of about 20 days, however, is required for proper development of internal structure.

A similar method is disclosed in EP0442324, whereby an oil-in-water emulsion is prepared by mixing 30-80% of an oil or fat (for example, cocoa butter) in water containing a small amount of a suitable emulsifier. This emulsion is mixed at a level of about 5% with a conventionally manufactured and tempered chocolate mass that is then molded. It is stated to be important to control the temperature to be no higher than 90°F to keep the oil-in-water emulsion stable. The homogeneously dispersed water generates a viscosity increase of the chocolate mass during solidification of the finished product. However, it is still necessary to store the molded product for several days to establish heat stability.

US 5,486,376 describes the use of water-in-oil microemulsions to introduce finely dispersed water into chocolate mass. Similarly, US 6,159,526 describes addition of water to the chocolate as a water-in-oil emulsion stabilized by sucrose fatty acid esters (HLB < 3). US 6,159,526 is concerned primarily with adding water-based flavors to chocolate.

WO 93/06737 describes methods for making gels/pastes by adding water to "Raftiline" (inulin), starches (potato and corn), "Splendid" (pectin), or gum Arabic. The paste is then mixed into tempered chocolate that is molded.

US 5,468,509 describes a method for adding up to 16% water to chocolate. The chocolate supposedly remains moldable. Two mixtures are prepared. (1) Cocoa is coated with cocoa butter in the presence of an emulsifier and (2) water, a sweetener and milk solids are blended to form an aqueous phase. The two are gently blended and the product molded.

A process for adding water to chocolate using extrusion technology is disclosed in U.S. Patent No 5,965,179. The water is added as an aqueous dispersion of microcrystalline cellulose (described as a "gel"). This gel is injected into the chocolate using a twin-screw extruder so as to form a product containing 3 to 20% of added water.

US2005/0118327 describes the preparation of gel beads comprising 20-50% sugar or polyol, water, emulsifying agent and a gelling agent (hydrocolloids). The gel beads are formed by dispersing a hot aqueous sol (90°C-95°C) in a liquid fat in a high shear mixer, to form an emulsion, and then cooling to get gelification of the beads. The gel beads dispersed in fat are blended into molten chocolate mass. One drawback is that the release of the sugar/polyol syrup from the gel beads, requires activation. US2005/0118327 teaches the activation of gel bead degradation by freezing at temperatures of -5°C to -15°C. It is reported that without this cooling it is necessary to store the products for 10-14 days to develop shape retention properties.

These prior art references have various drawbacks. When water, glycerol or other humectants liquids are added to the tempered chocolate, the typical viscosity increase makes it very difficult to use the material for typical enrobing or molding processes. Furthermore, the addition of a humectant liquid makes the texture of the final product slightly gritty, an effect which is perceived as unpleasant by consumers. A high water content in the final product furthermore bears the risk of microbiological contamination. Many of the processes are complex, or require additional steps in the production procedure, and/or require the use of emulsifiers and/or gelling agents.

Accordingly there is an ongoing need to provide a chocolate product that shows shape retention above the usual melting temperature of chocolate while still having a pleasant texture. There is furthermore a need to provide a method for making such a product.

It is an aim of the present invention to provide a chocolate product which minimizes or overcomes one or more disadvantages of the above-mentioned references.

### Summary of the invention

The problem underlying the present invention is solved by a chocolate product with a tropicalised shell and a non-tropicalised core. The tropicalised shell comprises chocolate and a humectant liquid, whereas no, or at least no significant amount having an impact on the heat stability, humectant liquid has been added to the non-tropicalised chocolate core.

It should be noted that within the context of the present invention the term chocolate is to be understood as covering real chocolate, i.e. chocolate containing no added vegetable fats other than cocoa butter, as well as chocolate analogues or chocolate compounds containing other vegetable fat.

When exposed to temperatures above the usual melting temperature of chocolate, only the core of the product will soften and above a certain temperature even become liquid, but the shell will remain solid and thus the whole product will maintain its shape. The chocolate product remains therefore dry to the touch and does not stick to its wrapper, or adopt the shape of the wrapper, even when exposed to temperatures above the melting range of the fat composition. The softened core leads to a novel and indulgent eating experience when the product is consumed at temperatures above the usual melting temperature of chocolate. The shape stability is achieved without having to compromise on the texture and organoleptic properties. Since the overall content of humectant liquid can be kept very low, the negative side effects which are usually occurring when humectants are added - in particular grittiness or a waxy mouthfeel - can be avoided.

Advantageously the product of the present invention can be prepared with commercially available food ingredients. No expensive additives are required.

Suitable humectants according to the present invention are food grade humectant liquids. Exemplary humectants according to the invention include propylene glycol, polyethylene glycol, polyols such as glycerol and sugar alcohols such as sorbitol, xylitol, maltitol, mannitol, solutions of sugars such as sucrose, fructose, dextrose, galactose, or any mixture thereof. According to a particular embodiment, the humectant liquid is a polyol. According to some embodiments the humectant liquid is glycerol.

It has been found that - obviously depending on the thickness of the shell and the dimensions of the product - sufficient shape retention can already be obtained with a glycerol content of 0.3% in the shell, but a glycerol content of at least 1% is preferred. According to a preferred embodiment of the invention, the shell contains between 1.5% and 2% of glycerol. The thinner the shell, the higher the glycerol content needs to be to obtain sufficient shape retention. However, there is a desire to keep the glycerol content as low as possible in order to keep the negative impact of the added glycerol on the texture and organoleptic properties as low as possible. The optimum range strongly depends on the chocolate (or chocolate compound) recipe.

It has been found that an ideal range for the glycerol content of the shell is between 1 % and 6%, even more preferred between 1.5 % and 4% of glycerol.

In terms of total glycerol content for the whole product, i.e. core and shell, good results have been achieved with a total glycerol content as low as 1.5% for a shell thickness corresponding to around 10% of the largest dimension of the product.

According to another embodiment the humectants liquid is water. Water can be pure potable water or can be provided as part of an aqueous solution, such as for instance an aqueous solution of carbohydrates, polyols, salts and/or proteins. For example water may be provided in the form a fruit juice, or in the form of milk. In a preferred embodiment water is used alone, i.e. pure water.

It has been found that - obviously depending on the thickness of the shell and the dimensions of the product - a sufficient shape retention can already be obtained with a water content of 0,5% in the shell. The thinner the shell, the higher the water content needs to be to obtain sufficient shape retention. However, there is a desire to keep the water content as low as possible to avoid any risk of microbiological contamination, and to keep the negative impact of the added water on the texture and organoleptic properties as low as possible. It has been found that an ideal range for the water content of the shell is between 0.5% and 2%. According to preferred embodiment of the invention, the shell contains around 1% of water. The risk of microbiological contamination linked to the use of water in the product can be lowered by the use of saturated sugar solutions, syrups or honey instead of water. All these ingredient have, just as water, the advantage that they are natural and not perceived as "artificial" additives by consumers.

According to a preferred embodiment of the invention, the shell has a thickness of between 1 and 6mm, preferably between 1.5 and 4mm.

Preferably, the thickness of the shell lies in a range of between 5% and 20% of the thickness of the product. Thinner shells need a higher content of humectant liquid in order to provide the desired shape retention to the product, but have the advantage that the overall content of humectant liquid can be kept low. This is especially an advantage when water or water containing liquids are used as a humectant, because the resulting tropicalised chocolate may have a slightly gritty texture, a negative side effect which the consumer will hardly notice in the final product if the shell is very thin.

There is also provided a method for making a chocolate product according to the invention comprising the steps of:
(a) preparing a tempered chocolate mass for making a shell,
(b) mixing said chocolate mass with a humectant liquid such as water or glycerol such as to obtain a tropicalised chocolate mass,
(c) preparing a tempered non-tropicalised chocolate mass without addition of a humectant liquid for making a filling,
(d') co-extruding the tropicalised chocolate mass and the non-tropicalised chocolate mass such as to form a product with a shell of tropicalised chocolate around a core of non-tropicalised chocolate.

When making the product using a co-extrusion process, the humectant liquid can be metered directly into the extruder, so that it mixes with the tempered chocolate for the shell in the extruder barrel only at the very last moment before being pumped through a die by the action of one or more screws. The chocolate is thus extruded before the viscosity increases to a value making it difficult to handle the chocolate.

Preferably, the extruder barrel and the die are cooled so that the chocolate is partially solidified and maintains its shape while leaving the die. The liquid tempered chocolate can be simply pumped through an inner hollow body of the die by means of a dosing pump to obtain a core and shell product according to the invention.

Furthermore, an alternative method for a chocolate product according to the invention is provided, said method comprising the steps of:
(a) preparing a tempered chocolate mass for making a shell,
(b) mixing said chocolate mass with a humectant liquid such as water or glycerol such as to obtain a tropicalised chocolate mass,
(c) preparing a tempered non-tropicalised chocolate mass without addition of a humectant liquids for making a filling,
(d) filling the tropicalised chocolate mass into a mold and allowing it to cool and solidify such as to form a shell,
(e) filling the non-tropicalised chocolate mass into the shell and allowing it to cool,
(f) applying a layer of tropicalised chocolate onto the filling such as to obtain a complete shell of tropicalised chocolate around a core of non-tropicalised chocolate,
(e) allowing the product to cool and solidify and demold it.

Preferably, after step (d) an insert with an outer contour corresponding to the inner contour of the mold is lowered into the molds to obtain shells with a homogenous thickness. Simple silicone inserts or cold plungers can be used.

Both methods to make the product according to the invention allow it to shape the chocolate used for the shell despite of the viscosity increase which is normally caused by the addition of the humectant liquid.

All patent and non-patent references cited in the present application, are hereby incorporated by reference in their entirety.

### Brief description of the drawings

Figure 1 a shows a representation of three chocolate products with 6% of glycerol in the shell and different shell thicknesses, after heating at 40°C and being subject to mechanical shock.
Figure 1b shows the products of Figure 1 a after having been cut through.
Figure 2a shows a representation of three chocolate products with 4% of glycerol in the shell and different shell thicknesses, before and after heating at 45°C and being subject to mechanical shock.
Figure 2b shows the products of Figure 2a after having been cut through.
Figure 3a shows a representation of three chocolate products with 2% of glycerol in the shell and different shell thicknesses, before and after heating at 45°C and being subject to mechanical shock.
Figure 3b shows the products of Figure 3a after having been cut through.

### Detailed description of the invention

The invention will now be described in further details in the following non-limiting example.

### EXAMPLES

### Example 1: Preparation of a molded core-shell chocolate product according to the invention, comprising glycerol

Tempered chocolate was manually mixed with glycerol at different concentrations, namely 2%, 4% and 6% of glycerol.

The mixture was filled into cuboid molds with the following dimensions: 50mm * 30mm*30mm. Tailored silicone inserts having a corresponding shape were used to displace the chocolate and to make hollow bodies with wall thicknesses of 2mm, 4mm and 6mm. The chocolate was allowed to cool and solidify over night. After solidification, tempered chocolate without any added humectant was filled into the shells. After at least 2 hours of cooling, the samples were closed by a layer of the same tempered chocolate comprising glycerol that had been used for making the rest of the shell, with the layer thickness corresponding to the thickness of the shell.

After cooling, the products were demolded. The resulting products were thus chocolate cuboids enclosed by a shell having a homogenous thickness of 2, 4 or 6mm, the only difference between the core and the shell being the glycerol content of the shell.

The overall glycerol concentrations for the different shell thicknesses and glycerol ceoncentrations are shown in the table below:

**TABLE 1: Overall glycerol content (shell and core)**

| | Shell Thickness | 2mm | 4mm | 6mm |
|---|---|---|---|---|
| Glycerol | | | | |
| Concentration | | | | |
| 2% | | 0.6% | 1.1% | 1.5% |
| 4% | | 1.2% | 2.2% | 2.9% |
| 6% | | 1.9% | 3.3% | 4.4% |

### Example 2: Heat stability of chocolate products according to the invention

The finished products of example 1 were left at 40° for 1 hour and tapped on a hard surface (mechanical shock) while lying on a tray.

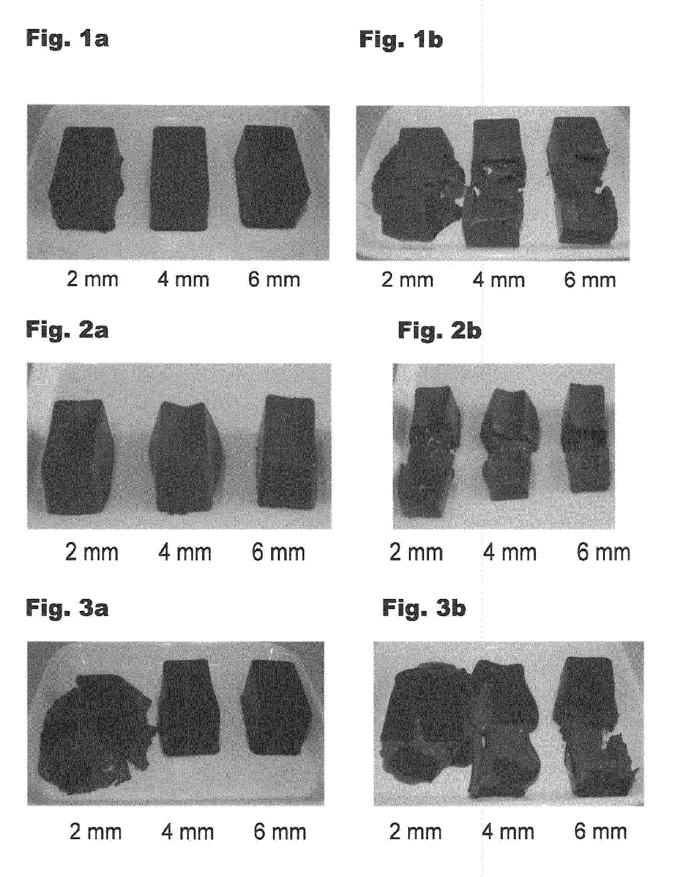

Figure 1a gives a photographic representation of the products according to Example 1 with a glycerol content of 6% in the shell chocolate, after the heat and mechanical shock treatment. From the left to the right, products with a shell thickness of 2mm, 4mm and 6mm are shown.

As one clearly sees in Fig. 1a, none of the samples was deformed.
Fig. 1b shows a cut through the same products. One can clearly differentiate the shell from the molten core.
Figure 2a gives a photographic representation of the products according to Example 1 with a glycerol content of 4% in the shell chocolate, after the heat and mechanical shock treatment. Again, from the left to the right, products with a shell thickness of 2mm, 4mm and 6mm are shown. While the products with 2mm and 4mm wall thickness show some bulging, the samples with the 6mm wall have not deformed.
Fig. 2b shows a cut through the products of Fig. 2a, and despite of the slight deformation for the samples on the left, one can still clearly differentiate the shell from the molten core.
Figure 3a gives a photographic representation of the products according to Example 1 with a glycerol content of 2% in the shell chocolate, after the heat and mechanical shock treatment. After strong tapping, the products with a shell thickness of 2mm collapsed, while the product with a shell thickness of 4mm only shows some bulging, The samples with the 6mm wall have not deformed.
Fig 3b, which shows again a cut through the products, shows that core and shell can still be distinguished for all of the samples, not only due to a slightly different colour, but also due to some shape retention hat can be observed even for collapsed walls, while the core is completely liquid.

## Claims

1. A chocolate product with a tropicalized shell comprising chocolate and a humectant liquid and a non-tropicalised chocolate core.

2. A chocolate product according to claim 1 wherein the humectant liquid is water.

3. A chocolate product according to claim 2 wherein the shell contains between 0.5% and 2%, preferably around 1% of water.

4. A chocolate product according to claim 1 wherein the humectant liquid is a polyol, in particular glycerol.

5. A chocolate product according to claim 4, wherein the shell contains between 0.3% and 6%, preferably between 1.5% and 4% of glycerol.

6. A chocolate product according to any of the preceding claims, wherein the core and the shell are co-extruded.

7. A chocolate product according to any of claims 1 to 5, wherein the shell is at least partly obtained by molding.

8. A chocolate product according to any of the preceding claims, wherein the shell has a thickness of between 1 and 6mm, preferably between 1.5 and 4mm.

9. A method for making a chocolate product according to claim 6, comprising the steps of
(a) preparing a tempered chocolate mass for making a shell,
(b) mixing said chocolate mass with a humectant liquid such as water or glycerol such as to obtain a tropicalised chocolate mass,
(c) preparing a tempered non-tropicalised chocolate mass without addition of a humectant liquids for making a filling,
(d) coextruding the tropicalised chocolate mass and the non-tropicalised chocolate mass such as to form a product with a shell of tropicalised chocolate around a core of non-tropicalised chocolate.

10. A method for making a chocolate product according to claim 7, comprising the steps of
(a) preparing a tempered chocolate mass for making a shell,
(b) mixing said chocolate mass with a humectant liquid such as water or glycerol such as to obtain a tropicalised chocolate mass,
(c) preparing a tempered non-tropicalised chocolate mass without addition of a humectant liquids for making a filling,
(d) filling the tropicalised chocolate mass into a mold and allowing it to cool and solidify such as to form a shell,
(e) filling the non-tropicalised chocolate mass into the shell and allowing it to cool,
(f) applying a layer of tropicalised chocolate onto the filling such as to obtain a complete shell of tropicalised chocolate around a core of non-tropicalised chocolate,
(e) allowing the product to cool and solidify and demold it.
